# EUROPEAN PATENT APPLICATION

(11) **EP 4 692 713 A1**
(43) Date of publication of application: **11.02.2026**
(21) Application number: 25193625.8
(22) Date of filing: 04.08.2025
(51) Int. Cl.: F28F 3/12, H01M 10/613, H01M 10/6551, H01M 10/6556, H01M 10/6557, H01M 10/6567, H01M 10/6568, H01M 50/204

(54) **LIQUID COOLING PLATE AND BATTERY PACK**

(30) Priority: 06.08.2024 CN 202421899586 U; 22.11.2024 WO PCT/CN2024/133971
(71) Applicant: Eve Energy Co., Ltd., Huizhou, Guangdong 516006 (CN)
(72) Inventor: FU, Weiyin, Huizhou, Guangdong, 516006 (CN)
(74) Representative: Berggren Oy

(57) **Abstract**

A liquid cooling plate includes: a body portion (10); a blocking portion; a liquid inlet structure (30); and a liquid outlet structure. The body portion has a heat exchange cavity (101) and an opening structure communicated with the heat exchange cavity. The opening structure is arranged at a side portion of the heat exchange cavity. At least a part of the blocking portion is disposed inside the opening structure to block and support the opening structure. The liquid inlet structure is arranged on the blocking portion. The liquid inlet structure is in communication with the heat exchange cavity. The liquid outlet structure is arranged on the blocking portion. The liquid outlet structure is in communication with the heat exchange cavity.

## Description

### TECHNICAL FIELD

Embodiments of the present disclosure relate to the technical field of battery packs, and more specifically, to a liquid cooling plate and a battery pack.

### BACKGROUND

A liquid cooling plate is essential in heat dissipation during integration of a battery pack. The liquid cooling plate usually includes a body portion, a liquid inlet nozzle and a liquid outlet nozzle.

In the art, after the liquid inlet nozzle and the liquid outlet nozzle are assembled to the body portion, stress concentration may occur at a connection position between the body portion and the liquid inlet nozzle and at a connection position between the body portion and the liquid outlet nozzle, and an assembly process is relatively complicated.

### SUMMARY

In a first aspect, a liquid cooling plate, includes: a body portion; a blocking portion; a liquid inlet structure; and a liquid outlet structure. The body portion has a heat exchange cavity and an opening structure communicated with the heat exchange cavity. The opening structure is arranged at a side portion of the heat exchange cavity. At least a part of the blocking portion is disposed inside the opening structure to block and support the opening structure. The liquid inlet structure is arranged on the blocking portion. The liquid inlet structure is in communication with the heat exchange cavity. The liquid outlet structure is arranged on the blocking portion. The liquid outlet structure is in communication with the heat exchange cavity.

In a second aspect, a battery pack, includes: at least two battery modules; and the liquid cooling plate in the first aspect. The liquid cooling plate and the at least two battery modules are stacked. The liquid cooling plate includes a central liquid cooling plate and an end liquid cooling plate; one middle liquid cooling plate is disposed between two adj acent battery modules of the at least two battery modules; the end liquid cooling plate is disposed on a side of one battery module of the at least two battery modules away from the middle liquid cooling plate. The one battery module is located at an end of the stacked battery modules.

According to the present disclosure, the liquid inlet structure and the liquid outlet structure are integrated into the blocking portion. Furthermore, the blocking portion is mounted to the opening structure, and the opening structure is blocked, and the liquid inlet structure and the liquid outlet structure are communicated to the heat exchange cavity. In this way, the body portion does not need to define two individual through holes communicated with the liquid inlet structure and the liquid outlet structure, such that the stress concentration may not occur at the body portion. Furthermore, a process of mounting the blocking portion having the liquid inlet structure and the liquid outlet structure to the opening structure is relatively simple. In addition, at least a portion of the blocking portion is located in the opening structure, a possibility of deformation at the opening structure is reduced, and structural stability of the liquid cooling plate is ensured.

### BRIEF DESCRIPTION OF THE DRAWINGS

FIG. 1 is a structural schematic view of a liquid cooling plate according to an embodiment of the present disclosure.
FIG. 2 is a structural schematic view of a portion A shown in FIG. 1.
FIG. 3 is a structural schematic view of integrating a liquid inlet structure and a liquid outlet structure with a first blocking portion according to an embodiment of the present disclosure.
FIG. 4 is a cross-sectional view of a portion of the liquid cooling plate shown in FIG. 1.
FIG. 5 is a side plane view of a body portion of the liquid cooling plate shown in FIG. 1.
FIG. 6 is a structural schematic view of another liquid cooling plate according to an embodiment of the present disclosure.
FIG. 7 is a structural schematic view of a battery pack according to an embodiment of the present disclosure, being viewed from a first viewing angle.
FIG. 8 is a structural schematic view of a portion B shown in FIG. 7.
FIG. 9 is a structural schematic view of the battery pack according to an embodiment of the present disclosure, being viewed from a second viewing angle.
FIG. 10 is a structural schematic view of a module fixation portion according to an embodiment of the present disclosure, being viewed from a first viewing angle.
FIG. 11 is a structural schematic view of the module fixation portion according to an embodiment of the present disclosure, being viewed from a second viewing angle.

### Reference numerals in the drawings:

10, body portion;
101, a heat exchange cavity; 1011, a communication channel; 1012, liquid inlet channel; 1013, liquid outlet channel;
1014, first converging channel; 1015, second converging channel; 1016, third converging channel; 1017, fourth converging channel;
102, first opening; 103, avoidance channel; 104, second opening;
11, first plate body; 12, second plate body;
20, first blocking portion;
30, liquid inlet structure; 31, first tube seat; 311, first chamber; 32, first tube section;
40, liquid outlet structure; 41, second tube seat; 411, second chamber; 42, second tube section;
51, separation portion; 52, first convex rib; 53, second convex rib;
60, second blocking portion;
70, positioning portion; 71, flat section; 72, bent section;
01, battery module; 02, middle liquid cooling plate; 03, end liquid cooling plate;
04, module fixation portion; 041, support column; 042, connection plate; 043, fastener;
05, heat-conducting layer.

### DETAILED DESCRIPTIONS

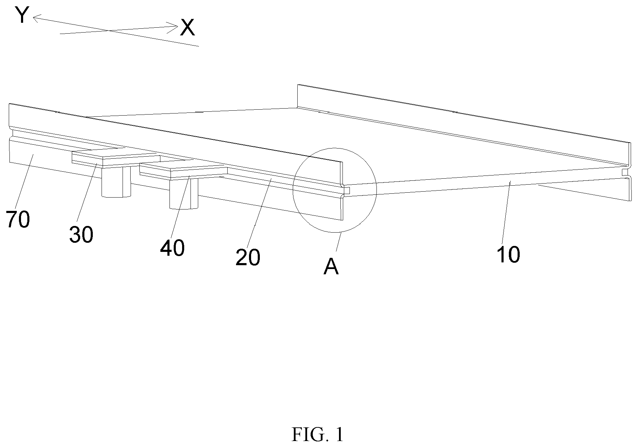

As shown in FIGS. 1 to 5, the present disclosure provides a liquid cooling plate. The liquid cooling plate includes a body portion 10, a blocking portion, a liquid inlet structure 30, and a liquid outlet structure 40. The body portion 10 has a heat exchange cavity 101 and an opening structure communicated with the heat exchange cavity 101. The opening structure is disposed at a side of the heat exchange cavity 101. At least a portion of the blocking portion is disposed inside the opening structure to block and support the opening structure. The liquid inlet structure 30 is arranged on the blocking portion. The liquid inlet structure 30 is in communication with the heat exchange cavity 101. The liquid outlet structure 40 is arranged on the blocking portion. The liquid outlet structure 40 is in communication with the heat exchange cavity 101.

According to the present disclosure, the liquid inlet structure 30 and the liquid outlet structure 40 are respectively integrated with the blocking portion. Subsequently, the blocking portion is mounted to the opening structure and blocks the opening structure, and the liquid inlet structure 30 and the liquid outlet structure 40 are respectively communicated to the heat exchange cavity. In this way, the body portion does not need to define two individual through holes communicated with the liquid inlet structure and the liquid outlet structure, such that the stress concentration may not occur at the body portion. Furthermore, a process of mounting the blocking portion integrated with the liquid inlet structure 30 and the liquid outlet structure 40 to the opening structure is relatively simple. In addition, at least a portion of the blocking portion is located in the opening structure, a possibility of deformation at the opening structure is reduced, and structural stability of the liquid cooling plate is ensured

In the present embodiment, the body portion 10 includes a first plate body 11 and a second plate body 12. The second plate body 12 and the first plate body 11 are spaced apart from each other. The heat exchange cavity 101 is formed between the second plate body 12 and the first plate body 11.

In the present embodiment, at least a portion of an end portion of the first plate body 11 along a first direction is bent away from the second plate body 12 to form a positioning portion 70. The positioning portion 70 is positioned and mated with a battery module. In this way, positioning and mating between the liquid cooling plate and the battery module 01 may be achieved easily, facilitating assembly of a battery pack.

It is understood that the first plate body 11 has two end portions along the first direction, and the two end portions extend along a second direction, the second direction is perpendicular to the first direction. The two end portions of the first plate body 11 along the first direction are respectively bent away from the second plate body 12 to form two positioning portions 70, respectively. An x-direction shown in FIG. 1 is the first direction, and a y-direction shown in FIG. 1 is the second direction.

In some embodiments, at least a portion of the end portion of the second plate body 12 along the first direction is bent away from the first plate body 11 to form the positioning portion 70. The positioning portion 70 is configured to position and mate with the battery module. The second plate body 12 has two end portions along the first direction, and the two end portions of the second plate body 12 along the first direction extend in the second direction. The second direction is perpendicular to the first direction. The two end portions of the second plate body 12 along the first direction are respectively bent away from the first plate body 11 to form two positioning portions 70 respectively. That is, the two positioning portions 70 of the first plate body 11 directly face toward the two positioning portions 70 of the second plate body 12 in a thickness direction of the liquid cooling plate. In this way, when the liquid cooling plate of the present disclosure is applied to a scenario in which a plurality of battery modules are stacked, one liquid cooling plate may be disposed between two adjacent battery modules. The positioning portions 70 on the first plate body 11 may position and mate with a battery module disposed at a side of the first plate body 11 away from the second plate body 12. The positioning portions 70 on the second plate body 12 may position and mate with a battery module at a side of the second plate body 12 away from the first plate body 11.

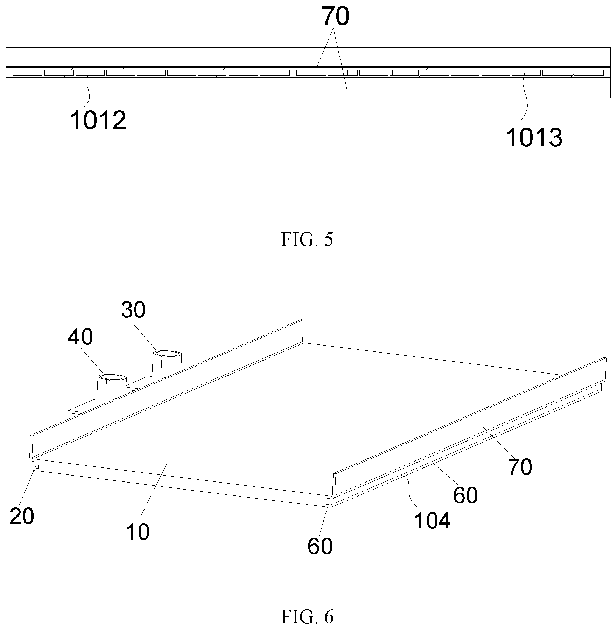

As shown in FIG. 6, in some embodiments, one of the first plate body 11 and the second plate body 12 is arranged with the positioning portions 70.

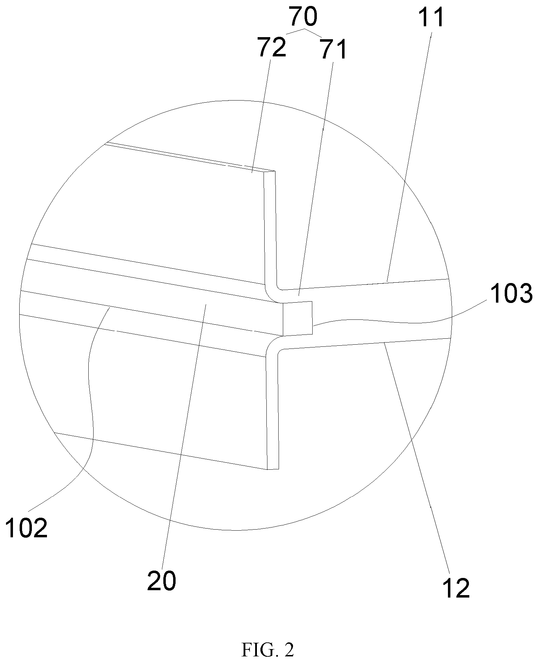

As shown in FIG. 2, specifically, an opening structure is formed between each positioning portion 70 and the other one of the first plate body 11 and the second plate body 12. The positioning portion 70 includes a flat section 71 and a bent section 72 connected to the flat section 71 along the first direction. An avoidance slot 103 is formed between the flat section 71 and the other one of the first plate body 11 and the second plate body 12. The avoidance slot 103 is disposed at an end of the opening structure along an extension direction of the opening structure. An end of the avoidance slot 103 away from the opening structure extends to the side face of the body portion 10. The blocking portion may pass through the avoidance slot 103. In this way, at least a portion of the blocking portion may be disposed in and extend through the opening structure, a process of assembling the liquid cooling plate can be performed more conveniently.

In some embodiments, an angle is formed between the bent section 72 and the first plate body 11. The bent section 72 is configured to be welded to an end plate of the battery module. In this way, the bent section 72 may position and mated with the end plate of the battery module, and is further fixedly connected with the end plate by welding, such that connection stability between the liquid cooling plate and the battery module is improved.

As shown in FIGS. 1 to 6, in the present embodiment, the opening structure includes a first opening 102 and a second opening 104. The first opening 102 and the second opening 104 are disposed opposite to each other in the first direction and are disposed at two ends of the heat exchange cavity 101. The blocking portion includes a first blocking portion 20 and a second blocking portion 60. At least a portion of the first blocking portion 20 is disposed in and extends through the first opening 102 to block and support the first opening 102. At least a portion of the second blocking portion 60 is disposed in and extends through the second opening 104 to block and support the second opening 104. The liquid inlet structure 30 is arranged on one of the first blocking portion 20 and the second blocking portion 60. The liquid outlet structure 40 is arranged on one of the first blocking portion 20 and the second blocking portion 60. In this way, the body portion 10 may be formed by pultrusion molding, i.e., ensuring that the body portion is an extruded profile, enhancing structural strength, structural stability, and sealing performance of the body portion.

In the present embodiment, at least a part of the first blocking portion 20 is disposed inside the first opening 102 to support the first opening 102. In this way, structural stability of the liquid cooling plate in a localized region is improved, deformation due to a pressure of a cooling liquid or external factors may be reduced.

In some embodiments, the first blocking portion 20 is welded to the body portion 10. In this way, sealing performance and connection stability between the first blocking portion 20 and the body portion 10 are ensured.

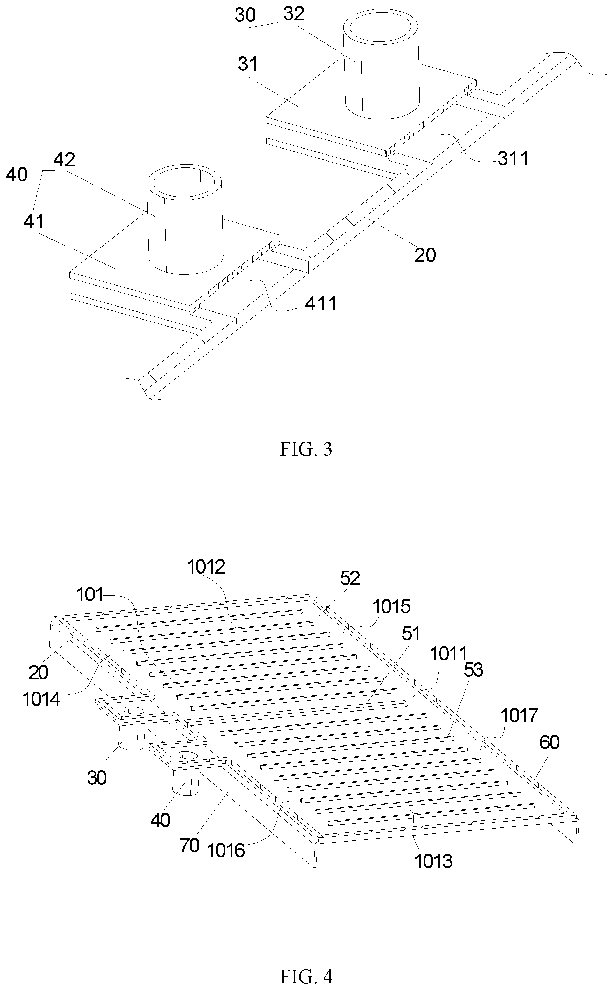

Specifically, as shown in FIG. 3, in the present embodiment, the first blocking portion 20 includes a first blocking rod, the first blocking rod defines a first through hole and a second through hole. The first through hole and the second through hole are spaced apart from each other along a length direction of the first blocking rod. The liquid inlet structure 30 is disposed at the first through hole, and a first port is communicated with the first through hole. The liquid outlet structure 40 is disposed at the second through hole, and a second port is communicated with the second through hole. In this way, a simple structure is provided, and sealing and supporting of the first opening 102 by the first blocking portion 20 may be achieved easily.

As shown in FIG. 6, in the present embodiment, the second blocking portion 60 includes a second blocking rod, the second blocking rod is embedded in and supports the second opening 104. The second blocking rod is welded to the body portion 10.

As shown in FIG. 4, in some embodiments, the liquid cooling plate further includes a separation portion 51. The separation portion 51 is disposed inside the heat exchange cavity 101 to separate the heat exchange cavity 101 into a liquid inlet chamber and a liquid outlet chamber independent from the liquid inlet chamber. The liquid inlet structure 30 is communicated to the liquid inlet chamber. The liquid outlet structure 40 is communicated to the liquid outlet chamber. A communication channel 1011 is formed between the separation portion 51 and the body portion 10. The liquid inlet chamber and the liquid outlet chamber are communicated with each other through the communication channel 1011. The liquid inlet chamber and the liquid outlet chamber being independent from each other may optimize flowing of the cooling medium inside the liquid cooling plate, improving a cooling effect.

In some embodiments, the communication channel 1011 is communicated to an end of the liquid inlet chamber away from the liquid inlet structure 30 and an end of the liquid outlet chamber away from the liquid outlet structure 40. By arranging the communication channel 1011 at the end away from the liquid inlet structure and the end away from the liquid outlet structure, a residence time length of the cooling medium inside the heat exchange cavity may be increased, improving a heat exchange efficiency.

Specifically, the separation portion 51 includes a separation rib, and an extension direction of the separation rib is perpendicular to an extension direction of a first side wall. An end of the separation rib is connected to the first blocking portion 20, and a gap is formed between the other end and a side of the heat exchange cavity 101 away from the first opening 102, and the gap forms the communication channel 1011. In this way, a simple structure is provided, and separation of the liquid inlet chamber and the liquid outlet chamber may be achieved easily.

In some embodiments, the liquid inlet chamber includes a plurality of liquid inlet channels 1012 that are independent from each other. An end of each of the plurality of liquid inlet channels 1012 is communicated to the liquid inlet structure 30, and the end of the plurality of liquid inlet channels 1012 is communicated to the communication channel 1011. The liquid outlet chamber includes a plurality of liquid outlet channels 1013 that are independent from each other. An end of each of the plurality of liquid outlet channels 1013 is communicated to the liquid outlet structure 40, and the other end of each of the plurality of liquid outlet channels 1013 is communicated to the communication channel 1011. In this way, uniformity of the liquid circulating in the liquid inlet chamber and the liquid outlet chamber can be improved, improving the cooling effect.

In some embodiments, the heat exchange cavity 101 further includes a first converging channel 1014, a second converging channel 1015, a third converging channel 1016, and a fourth converging channel 1017. The first converging channel 1014 is disposed at a side of the plurality of liquid inlet channels 1012 near the liquid inlet structure 30. The first converging channel 1014 is communicated to the liquid inlet structure 30. First ends of the plurality of liquid inlet channels 1012 are communicated to the first converging channel 1014. In this way, the liquid may be more uniformly distributed, improving the cooling effect.

Similarly, the second converging channel 1015 is disposed at a side of the plurality of liquid inlet channels 1012 away from the liquid inlet structure 30. Second ends of the plurality of liquid inlet channels 1012 are communicated to the second converging channel 1015. The second converging channel 1015 is communicated to the communication channel 1011. The third converging channel 1016 is disposed at a side of the plurality of liquid outlet channels 1013 near the liquid outlet structure 40. The third converging channel 1016 is communicated to the liquid outlet structure 40. First ends of the plurality of liquid outlet channels 1013 are communicated to the third converging channel 1016. The fourth converging channel 1017 is disposed at a side of the plurality of liquid outlet channels 1013 away from the liquid outlet structure 30. Second ends of the plurality of liquid outlet channels 1013 are communicated to the fourth converging channel 1017. The fourth converging channel 1017 is communicated to the communication channel 1011.

Specifically, the liquid cooling plate further includes a first convex rib 52, the first convex rib 52 is received in the liquid inlet chamber to separate the liquid inlet chamber into the plurality of liquid inlet channels 1012 that are independent from each other.

The present disclosure does not limit a specific shape and the number of the first convex rib 52.

At least one first convex rib 52 is arranged.

In the present embodiment, a plurality of first convex ribs 52 are arranged. The plurality of first convex ribs 52 are spaced apart from each other along the length direction of the first opening 102. One liquid inlet channel 1012 is formed between two adjacent first convex ribs 52.

In the present embodiment, each of the plurality of first convex ribs 52 is linear. The first convex rib 52 extends along a line perpendicular to the first opening 102. Each of two ends of the first convex rib 52 is spaced apart from a respective one of two side walls of the liquid inlet chamber. The first converging channel 1014 is formed between first ends of the plurality of first convex ribs 52 and one of the two side walls of the liquid inlet chamber; and the second converging channel 1015 is formed between second ends of the plurality of first convex ribs 52 and the other one of the two side walls of the liquid inlet chamber.

In other embodiments, the first convex rib 52 may be wavy in shape.

In some embodiments, the liquid cooling plate further includes a second convex rib 53, the second convex rib 53 is received in the liquid outlet chamber to separate the liquid outlet chamber into a plurality of liquid outlet channels 1013 that are independent from each other.

The present disclosure does not limit a specific shape and the number of the second convex rib 53.

At least one second convex rib 53 is arranged.

In the present embodiment, a plurality of second convex ribs 53 are arranged. The plurality of second convex ribs 53 are spaced apart from each other along the length direction of the first opening 102. One liquid outlet channel 1013 is formed between two adjacent second convex ribs 53.

In the present embodiment, each of the plurality of second convex ribs 53 is linear. The second convex rib 53 extends along the line perpendicular to the first opening 102. Each of two ends of the second convex rib 53 is spaced apart from a respective one of two side walls of the liquid outlet chamber. The third converging channel 1016 is formed between first ends of the plurality of second convex ribs 53 and one of the two side walls of the liquid outlet chamber; and the fourth converging channel 1017 is formed between second ends of the plurality of second convex ribs 53 and the other one of the two side walls of the liquid outlet chamber.

In other embodiments, the second convex rib 53 may be wavy in shape.

As shown in FIG. 3, in some embodiments, the liquid inlet structure 30 includes a first tube seat 31 and a first tube section 32 connected to the first tube seat 31. The first tube seat 31 is arranged on the blocking portion, the first tube seat 31 has a first chamber 311 and a first port communicated with the first chamber 311. The first port is communicated to the heat exchange cavity 101. The first tube section 32 and the first port are communicated to the first chamber 311. The first tube section 32 and the first port are located on different surfaces of the first tube seat 31. The first tube section 32 serves as a guiding portion for guiding the liquid to enter the liquid cooling plate from an outside and may facilitate controlling a flowing direction and a flowing rate of the liquid. The first tube seat 31 may serve as a buffering region for the liquid to reduce a possibility of the liquid directly impacting the heat exchange cavity 101, preventing damage caused by the impact of the liquid. Moreover, the first tube section 32 and the first port are located on different surfaces of the first tube seat 31, and in this way, a structural design of the liquid inlet structure 30 is reasonable, avoiding a possibility of mutual interference between the first tube section 32 and the body portion 10, improving convenience of assembling the liquid inlet structure 30.

In the present embodiment, the first tube seat 31 is substantially a cubic shell. The first port is defined in a side face of the first tube seat 31. The first tube seat 31 is arranged on one surface of the first tube seat 31. In this way, a simple structure is provided, and processing may be performed easily.

In other embodiments, the first tube seat 31 may be configured as a shell of other shapes. For example, the first tube seat 31 may be cylindrical. The first port may be arranged on an end surface of the first tube seat 31, and the first tube section 32 may be arranged on a circumferential surface of the first tube seat 31.

In some embodiments, as shown in FIG. 3, the liquid outlet structure 30 includes a second tube seat 41 and a second tube section 42 connected to the second tube seat 41. The second tube seat 41 is arranged on the blocking portion, the second tube seat 41 has a second chamber 411 and a second port communicated with the second chamber 411. The second tube section 42 and the second port are communicated to the second chamber 411. The second tube section 42 and the second port are located on different surfaces of the second tube seat 41. In the present embodiment, a shape of the liquid outlet structure 40 is the same as a shape of the liquid inlet structure 30. In this way, variety of components is reduced, and an efficiency of assembling the liquid inlet structure 30 and the liquid outlet structure 40 is improved.

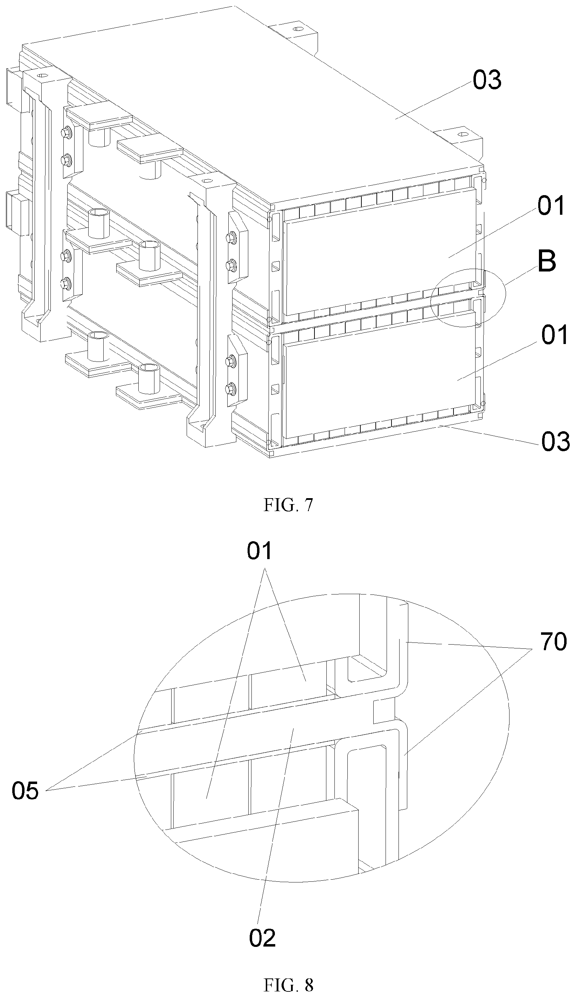

As shown in FIGS. 7 to 9, the present disclosure provides a battery pack including at least two battery modules 01 and the liquid cooling plate as described above. The liquid cooling plate and the at least two battery modules 01 are stacked. The liquid cooling plate includes a middle liquid cooling plate 02 and an end liquid cooling plate 03. One middle liquid cooling plate 02 is disposed between two adjacent battery modules 01. The end liquid cooling plate 03 is disposed on a side of the battery module 01 away from the middle liquid cooling plate 02, where the battery module 01 is located at an end of the stacked battery modules. In this way, the at least two battery modules 01 can be cooled by liquid by the middle liquid cooling plate 02 and the end liquid cooling plate 03, improving the liquid cooling effect of the battery modules 01.

In some embodiments, the two positioning portions 70 are respectively disposed at edges of two sides of the middle liquid cooling plate 02. Each positioning portion 70 is located at an outer side of one respective battery module 01 and is positioned and mated with another battery module 01. In this way, an effect of positioning the battery modules 01 can be improved, and stability of the battery modules 01 can be improved.

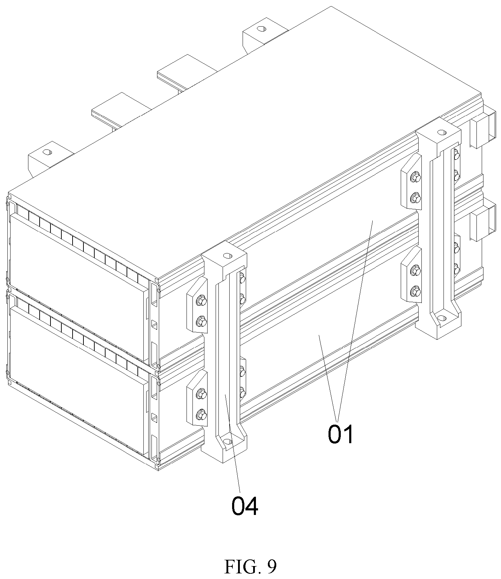

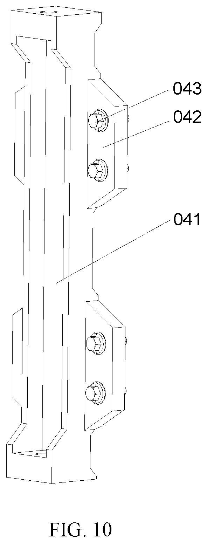

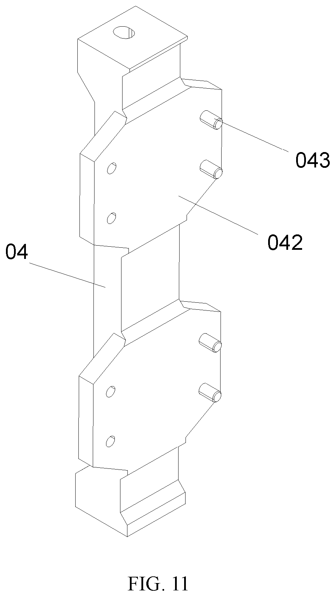

As shown in FIGS. 9 to 11, in some embodiments, each battery module 01 includes a cell and two end plates. The cell is disposed between the two end plates. The battery module 01 includes a module fixation portion 04, the module fixation portion 04 is disposed on a same side of end plates of a plurality of battery modules 01. The module fixation portion 04 includes: a support column 041, a connection plate 042, and a fastener 043. The connection plate 042 is arranged on the support column 041, and each end plate corresponds to at least one respective connection plate 042. The connection plate 042 is parallel to and abuts against the end plate. The connection plate 042 is connected to the end plate by the fastener 043.

In this way, a proper structure design is provided, a contact area between the module fixation portion 04 and the end plates is ensured, and assembling may be performed easily.

In some embodiments, the positioning portion 70 is protruding towards an outside of the end plate. A side of the support column 041 near the battery module 01 defines an avoidance groove. The avoidance groove extends through the support column 041 along a line perpendicular to the support column 041. The avoidance groove is located corresponding to the positioning portion 70 and is configured to provide a space for arranging the positioning portion 70. In this way, stability of abutting between the connection plate 042 and the end plate is improved, a possibility of a gap being formed between the end plate and the connection plate 042 may be reduced.

Specifically, in the present embodiment, the liquid inlet structure 30, the liquid outlet structure 40, the module fixation portion 04, and the end plate are located on a same side where the battery pack is located. In this way, assembling and maintenance of the battery pack can be achieved.

As shown in FIG. 8, in some embodiments, the battery pack further includes a heat-conducting layer 05, disposed between the liquid cooling plate and the battery module 01. The heat-conducting layer 05 is arranged to enhance a heat exchange effect between the liquid cooling plate and the battery module 01.

It is understood that a side of the end liquid cooling plate 03 near the battery module 01 is arranged with the heat-conducting layer 05. Each of two sides of the middle liquid cooling plate 02 is arranged with the heat-conducting layer 05.

In the present embodiment, the battery pack further includes a limiting strip, the limiting strip is arranged on a surface of the liquid cooling plate near the battery module 01. The heat-conducting layer 05 includes a heat-conducting adhesive that is coated on the surface of the liquid cooling plate. The limiting strip and the heat-conducting adhesive fit with each other for position limiting. In this way, the heat-conducting adhesive being deformed or being unevenly coated may be reduced, improving a heat-conducting effect of the heat-conducting adhesive.

## Claims

1. A liquid cooling plate, comprising:
a body portion (10), having a heat exchange cavity (101) and an opening structure communicated with the heat exchange cavity (101); wherein the opening structure is arranged at a side portion of the heat exchange cavity (101);
a blocking portion, at least a part of the blocking portion being disposed inside the opening structure to block and support the opening structure;
a liquid inlet structure (30), arranged on the blocking portion, wherein the liquid inlet structure (30) is in communication with the heat exchange cavity (101);
a liquid outlet structure (40), arranged on the blocking portion, wherein the liquid outlet structure (40) is in communication with the heat exchange cavity (101).

2. The liquid cooling plate according to claim 1, wherein the body portion (10) comprises:
a first plate body (11) and a second plate body (12), wherein the second plate body (12) and the first plate body (11) are spaced apart from and opposite to each other; the heat exchange cavity (101) is formed between the second plate body (12) and the first plate body (11);
wherein at least a portion of an end portion of the first plate body (11) along a first direction is bent away from the second plate body (12) to form a positioning portion (70); the positioning portion (70) is configured to position and be mated with a battery module;
and/or
wherein at least a portion of an end portion of the second plate body (12) along a first direction is bent away from the first plate body (11) to form a positioning portion (70), the positioning portion (70); the positioning portion (70) is configured to position and be mated with a battery module.

3. The liquid cooling plate according to claim 2, wherein the opening structure is formed between the positioning portion (70) and one of the first plate body (11) or the second plate body (12) that is not formed with the positioning portion (70); the positioning portion (70) comprises a flat section (71) and a bent section (72) connected to the flat section (71) in the first direction; an avoidance groove is formed between the flat section (71) and the one of the first plate body (11) or the second plate body (12) that is not formed with the positioning portion (70); the avoidance groove is located at an end of the opening structure end in an extension direction of the opening structure; an end of the avoidance groove away from the opening structure extends to a side face of the body portion (10); the avoidance groove extends through the blocking portion.

4. The liquid cooling plate according to claim 2, wherein the positioning portion (70) comprises a bent section (72); an angle is formed between the bent section (72) and the first plate body (11); and the first plate body (11), the bent section (72) is configured to be welded to an end plate of a battery module.

5. The liquid cooling plate according to claim 1, wherein the opening structure comprises a first opening (102) and a second opening (104); the first opening (102) and the second opening (104) are disposed opposite to each other in a first direction at two ends of the heat exchange cavity (101) respectively; the blocking portion comprises a first blocking portion (20) and a second blocking portion (60); at least part of the first blocking portion (20) is disposed inside and extends through the first opening (102) to block and support the first opening (102); at least part of the second blocking portion (60) is disposed inside and extends through the second opening (104) to block and support the second opening (104); the liquid inlet structure (30) is arranged on one of the first blocking portion (20) and the second blocking portion (60); the liquid outlet structure (40) is arranged on one of the first blocking portion (20) and the outlet structure.

6. The liquid cooling plate according to claim 1, wherein the liquid cooling plate further comprises: a separation portion (51), received in the heat exchange cavity (101) to separate the heat exchange cavity (101) into a liquid inlet chamber and a liquid outlet chamber that are independent from each other; the liquid inlet structure (30) is in communication with the liquid inlet chamber, the liquid outlet structure (40) is in communication with the liquid outlet chamber; a communication channel (1011) is formed between the separation portion (51) and the body portion (10); the liquid inlet chamber and the liquid outlet chamber are communicated to each other through the communication channel (1011).

7. The liquid cooling plate according to any one of claims 1 to 6, wherein,
the liquid inlet structure (30) comprises a first tube seat (31) and a first tube section (32) connected to the first tube seat (31); the first tube seat (31) is arranged on the blocking portion, the first tube seat (31) has a first chamber (311) and a first port communicated to the first chamber (311); the first port is communicated to the heat exchange cavity (101); the first tube section (32) and the first port are communicated to the first chamber (311); the first tube section (32) and the first port are located on different surfaces of the first tube seat (31);
and/or
the liquid outlet structure (40) comprises a second tube seat (41) and a second tube section (42) connected to the second tube seat (41); the second tube seat (41) is arranged on the blocking portion, the second tube seat (41) has a second chamber and a second port communicated to the second chamber; the second port is communicated to the heat exchange cavity (101); the second tube section (42) and the second port are communicated to the second chamber; the second tube section (42) and the second port are located on different surfaces of the second tube seat (41).

8. The liquid cooling plate according to claim 6, wherein the liquid inlet chamber comprises a plurality of liquid inlet channels (1012) that are independent from each other; an end of each of the plurality of liquid inlet channels (1012) is communicated to the liquid inlet structure (30); and the end of the plurality of liquid inlet channels (1012) is communicated to the communication channel (1011).

9. The liquid cooling plate according to claim 8, wherein the liquid outlet chamber comprises a plurality of liquid outlet channels (1013) that are independent from each other; an end of each of the plurality of liquid outlet channels (1013) is communicated to the liquid outlet structure (40), and the other end of each of the plurality of liquid outlet channels (1013) is communicated to the communication channel (1011).

10. The liquid cooling plate according to claim 9, wherein the heat exchange cavity (101) comprises a first converging channel (1014), a second converging channel (1015), a third converging channel (1016), and a fourth converging channel (1017);
the first converging channel (1014) is disposed at a side of the plurality of liquid inlet channels (1012) near the liquid inlet structure (30); the first converging channel (1014) is communicated to the liquid inlet structure (30); first ends of the plurality of liquid inlet channels (1012) are communicated to the first converging channel (1014).

11. The liquid cooling plate according to claim 10, wherein the second converging channel (1015) is disposed at a side of the plurality of liquid inlet channels (1012) away from the liquid inlet structure (30); second ends of the plurality of liquid inlet channels (1012) are communicated to the second converging channel (1015); the second converging channel (1015) is communicated to the communication channel (1011).

12. The liquid cooling plate according to claim 10, wherein the third converging channel (1016) is disposed at a side of the plurality of liquid outlet channels (1013) near the liquid outlet structure (40); the third converging channel (1016) is communicated to the liquid outlet structure (40); first ends of the plurality of liquid outlet channels (1013) are communicated to the third converging channel (1016); the fourth converging channel (1017) is disposed at a side of the plurality of liquid outlet channels (1013) away from the liquid outlet structure (40); second ends of the plurality of liquid outlet channels (1013) are communicated to the fourth converging channel (1017); the fourth converging channel (1017) is communicated to the communication channel (1011).

13. A battery pack, comprising:
at least two battery modules (01);
the liquid cooling plate according to any one of claims 1 to 12, wherein the liquid cooling plate and the at least two battery modules (01) are stacked;
wherein the liquid cooling plate comprises a middle liquid cooling plate (02) and an end liquid cooling plate (03); one middle liquid cooling plate (02) is disposed between two adjacent battery modules (01) of the at least two battery modules (01); the end liquid cooling plate (03) is disposed on a side of one battery module of the at least two battery modules (01) away from the middle liquid cooling plate (02), wherein the one battery module is located at an end of the stacked battery modules (01).

14. The battery pack according to claim 13, wherein an edge of each of two sides of the middle liquid cooling plate (02) is arranged with a positioning portion (70); the positioning portion (70) is disposed at an outer side of a respective one of the at least two battery modules (01) and is configured to position and mated with the respective battery module.

15. The battery pack according to claim 13, wherein each of the at least two battery modules (01) comprises a cell and two end plates; the cell is disposed between the two end plates; each of the at least two battery modules (01) comprises a module fixation portion (04); the module fixation portion (04) is disposed on a same side of the end plates of all of the at least two battery modules (01); the module fixation portion (04) comprises:
a support column (041);
a connection plate (042), arranged on the support column (041), wherein each of the two end plates is arranged corresponding to the connection plate (042) of the module fixation portion (04) of at least one of the at least two battery modules (01); the connection plate (042) is parallel to and abuts against the end plates;
a fastener (043), wherein the connection plate (042) is connected to the end plate by the fastener (043).
